Europäisches Patentamt

European Patent Office

Office européen des brevets ·

(11) Veröffentlichungsnummer: **0 204 955**
**A2**

# (12) EUROPÄISCHE PATENTANMELDUNG

(21) Anmeldenummer: 86106142.2

(22) Anmeldetag: 05.05.86

(51) Int. Cl.⁴: **A47B 96/02**

(30) Priorität: 28.05.85 DE 3519062

(43) Veröffentlichungstag der Anmeldung:
**17.12.86 Patentblatt 86/51**

(84) Benannte Vertragsstaaten:
**BE CH DE FR IT LI NL**

(71) Anmelder: **SCHLAPP MÖBEL GMBH & CO KG**
**Am Kirchborn**
**D-6392 Neu-Anspach/Westerfeld(DE)**

(72) Erfinder: **Schlapp, Wilhelm**
**Schulstrasse 8**
**D-6392 Neu-Anspach 1(DE)**

(74) Vertreter: **Beyer, Werner, Dipl.-Ing.**
**Patentanwälte Dipl.-Ing. Werner Beyer**
**Dipl.-Wirtsch.-Ing. Bernd Jochem**
**Staufenstrasse 36 Postfach 17 01 45**
**D-6000 Frankfurt/Main(DE)**

(54) **Nichtmetallischer Einlegeboden, vorzugsweise für Regale.**

(57) Um das Durchhängen eines belasteten Einlegebodens zu verhindern oder zumindest in engen Grenzen zu halten, ist eine in Längsrichtung leicht nach oben durchgebogene Bodenplatte (1) mit einem Unterzug fest verbunden, insbesondere verleimt. Als Unterzug können sowohl eine Platte (2) mit gleichen Abmessungen in Länge und Breite wie die Bodenplatte (1) als auch zwei Leisten (3 und 4) oder Winkelleisten (5 und 6) vorgesehen sein.

*Fig.1*

EP 0 204 955 A2

## Nichtmetallischer Einlegeboden, vorzugsweise für Regale

Die Erfindung bezieht sich auf einen nichtmetallischen Einlegeboden, vorzugsweise für Regale.

Es ist bekannt, Einlegeböden zwischen Regalwänden oder Regalpfosten anzuordnen und durch geeignete Halterungen zu befestigen. Wenn solche Einlegeböden stark belastet werden, beispielsweise durch Bücher oder schwere Kunstgegenstände, biegen sie sich nach unten durch. Dies bietet nicht nur einen unschönen Anblick, sondern kann auch zu einer Beschädigung der Halterungen oder zu einem Herausgleiten aus diesen führen.

Der Erfindung liegt die Aufgabe zugrunde, die sich unter dem Einfluß seiner Belastung ergebende Durchbiegung eines nichtmetallischen Einlegebodens zu vermeiden oder zumindest auf ein geringes Maß zu beschränken.

Diese Aufgabe wird erfindungsgemäß dadurch gelöst, daß eine in ihrer Längsrichtung leicht nach oben durchgebogene Bodenplatte mit einem Unterzug fest verbunden, insbesondere verleimt ist.

Der mit der Erfindung erzielte Vorteil besteht vor allem darin, daß durch die mittels des Unterzuges stabilisierte Durchbiegung der Bodenplatte nach oben der Einlegeboden eine Vorspannung erhält, die seiner Belastung durch das zu tragende Gut entgegenwirkt. Deshalb gibt der Einlegeboden unter Belastung kaum nach; bei entsprechender Bemessung der Vorspannung etwa gerade so viel, daß er eine ebene Gestalt annimmt. Dabei liegt das Ausmaß der Durchbiegung der unbelasteten Bodenplatte vorzugsweise im Bereich von 0,1 bis 0,5 Prozent der Länge des Einlegebodens.

Ferner können mit dem erfindungsgemäßen Einlegeboden auch größere Spannweiten überbrückt werden, ohne daß es zu einem unerwünschten Durchhängen des Einlegebodens kommt.

Die Bodenplatte kann aus einer Spanplatte oder Tischlerplatte, gegebenenfalls mit einem Furnier oder einer Kunststoffbeschichtung versehen, oder aus Massivholz oder Kunststoff bestehen.

Für die Ausbildung des Unterzuges werden in weiterer Ausgestaltung der Erfindung die nachstehenden Lösungen vorgeschlagen.

So kann als Unterzug eine vorzugsweise nichtmetallische Platte mit gleichen oder annähernd gleichen Abmessungen in Länge und Breite wie die Bodenplatte vorgesehen sein. Dadurch weist der Einlegeboden auch an seiner Unterseite eine glatte Fläche auf, so daß beim Herausnehmen von Gegenständen aus einem Regal diese nicht am darüber befindlichen Einlegeboden hängenbleiben können.

Es können anstelle der vorerwähnten Platte aber auch zwei Leisten, vorzugsweise aus Holz oder Kunststoff, vorgesehen sein, die parallel zu den Längskanten der Bodenplatte, insbesondere an deren Längskanten, angeordnet sind. Die Verwendung von Leisten kann dann von Vorteil sein, wenn sie in Verbindung mit den Halterungen des Einlegebodens außerdem dessen Verschieben quer zu seiner Längsrichtung verhindern.

Ferner können als Unterzug zwei Winkelleisten, vorzugsweise aus Holz oder Kunststoff, vorgesehen sein, die jeweils eine Seite und einen Teil der Unterseite der Bodenplatte umfassen; dabei ist jeweils der an der Unterseite der Bodenplatte anliegende Schenkel der Winkelleisten der Durchbiegung der Bodenplatte angepaßt. Der jeweils an der Seite der Bodenplatte anliegende Schenkel der Winkelleisten kann ebenfalls der Durchbiegung der Bodenplatte angepaßt sein. Es ist aber auch möglich, auf diese Anpassung zu verzichten, so daß die Vorspannungs-Durchbiegung einer unbelasteten Bodenplatte für einen Benutzer des Regals nicht sichtbar ist, sondern ihm der Eindruck eines ebenen Einlegebodens vermittelt wird. Ferner kann der an der Seite der Bodenplatte anliegende Schenkel der Winkelleiste höher gewählt werden, als es der Dicke der Bodenplatte entspricht. Das hat den Vorteil, daß über diese Schenkel Hinweisschilder oder andere Markierungen gehängt werden können. Im übrigen unterstützen die Winkelleisten infolge ihrer größeren Biegefestigkeit die Wirkung der Vorspannung der Bodenplatte.

In der Zeichnung sind Ausführungsbeispiele der Erfindung gezeigt, die im folgenden näher beschrieben werden. Dabei ist das Ausmaß der Durchbiegung der Bodenplatte nach oben zwecks besserer Erkennbarkeit übertrieben dargestellt.

Es zeigen

Fig. 1 einen erfindungsgemäßen Einlegeboden mit einer Platte als Unterzug, in der Ansicht von vorn,

Fig. 2 desgleichen im Querschnitt,

Fig. 3 einen erfindungsgemäßen Einlegeboden mit zwei parallelen Leisten als Unterzug, in der Ansicht von vorn,

Fig. 4 desgleichen im Querschnitt,

Fig. 5 einen erfindungsgemäßen Einlegeboden mit zwei Winkelleisten als Unterzug, im Längsschnitt,

Fig. 6 desgleichen im Querschnitt.

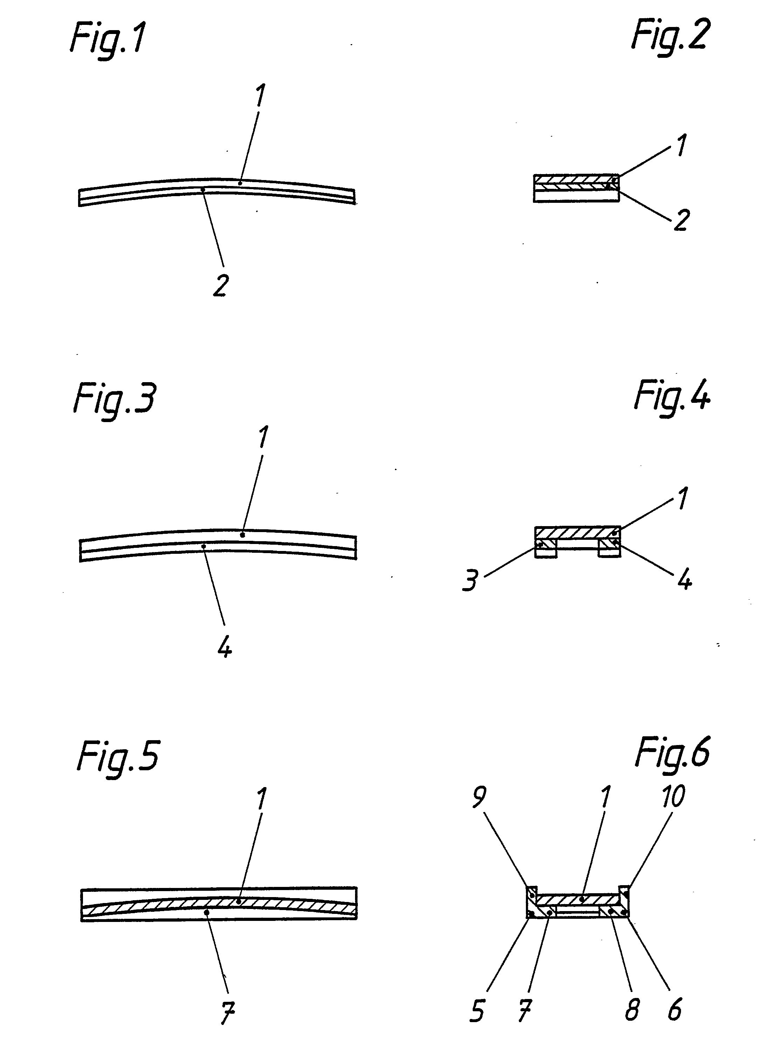

In Fig. 1 ist mit (1) eine Bodenplatte bezeichnet, die nach oben durchgebogen ist. Um diese Durchbiegung zu stabilisieren, ist sie mit einer als Unterzug dienenden Platte (2) verleimt. Wie Fig. 1 und 2 erkennen lassen, hat die Platte (2) die gleichen Längen-und Breitenmaße wie die Bodenplatte (1), so daß beide zusammen eine geschlossene Einheit bilden.

In Fig. 3 und 4 sind anstelle einer Platte zwei Leisten (3 und 4) mit der Bodenplatte (1) verleimt. Dabei sind die Leisten (3 und 4) jeweils an den Längskanten der Bodenplatte (1) angeordnet.

In Fig. 5 und 6 sind zur Stabilisierung der Bodenplatte (1) zwei mit dieser verleimte Winkelleisten (5 und 6) vorgesehen. Die waagerechten Schenkel (7 und 8) der Winkelleisten (5 und 6) sind auf ihrer oberen Seite der Durchbiegung der Bodenplatte (1) angepaßt, während die senkrechten Schenkel (9 und 10) gerade belassen sind, so daß einem Regalbenutzer die Durchbiegung der Bodenplatte (1) verborgen bleibt.

Der erfindungsgemäße Einlegeboden ist in erster Linie für Bücherregale geeignet. Seine Anwendung ist jedoch hierauf nicht beschränkt; vielmehr kann dieser Einlegeboden beispielsweise auch bei Geschirrschränken Verwendung finden, das heißt überall dort, wo ein Einlegeboden größere Lasten tragen soll.

**Ansprüche**

1. Nichtmetallischer Einlegeboden, vorzugsweise für Regale, dadurch gekennzeichnet, daß eine in ihrer Längsrichtung leicht nach oben durchgebogene Bodenplatte (1) mit einem Unterzug fest verbunden, insbesondere verleimt, ist.

2. Einlegeboden nach Anspruch 1, dadurch gekennzeichnet, daß als Unterzug eine vorzugsweise nichtmetallische Platte (2) mit gleichen oder annähernd gleichen Abmessungen in Länge und Breite wie die Bodenplatte (1) vorgesehen ist.

3. Einlegeboden nach Anspruch 1, dadurch gekennzeichnet, daß als Unterzug zwei zu den Längskanten der Bodenplatte (1) parallele Leisten - (3 und 4), vorzugsweise aus Holz oder Kunststoff, vorgesehen sind.

4. Einlegeboden nach Anspruch 3, dadurch gekennzeichnet, daß die Leisten (3 und 4) an den Längskanten der Bodenplatte (1) angeordnet sind.

5. Einlegeboden nach Anspruch 1, dadurch gekennzeichnet, daß als Unterzug zwei jeweils eine Seite und einen Teil der Unterseite der Bodenplatte (1) umfassende Winkelleisten (5 und 6), vorzugsweise aus Holz oder Kunststoff, vorgesehen sind, wobei jeweils der an der Unterseite der Bodenplatte (1) anliegende Schenkel (7 bzw. 8) der Winkelleisten (5 und 6) der Durchbiegung der Bodenplatte (1) angepaßt ist.

6. Einlegeboden nach Anspruch 5, dadurch gekennzeichnet, daß jeweils der an der Seite der Bodenplatte (1) anliegende Schenkel (9 bzw. 10) der Winkelleisten (5 und 6) der Durchbiegung der Bodenplatte (1) angepaßt ist.

0 204 955

Fig.1

Fig.2

Fig.3

Fig.4

Fig.5

Fig.6